## Europäisches Patentamt
## European Patent Office
## Office européen des brevets

(19)

(11) Numéro de publication: **0 235 028**
**B1**

(12) ## FASCICULE DE BREVET EUROPEEN

(45) Date de publication du fascicule du brevet:
**18.04.90**

(51) Int. Cl.⁴: **F02K 9/97, F02K 9/95**

(21) Numéro de dépôt: **87400337.9**

(22) Date de dépôt: **17.02.87**

(54) Allumeur fixable dans la tuyère d'un propulseur.

(30) Priorité: **21.02.86 FR 8602378**

(43) Date de publication de la demande:
**02.09.87 Bulletin 87/36**

(45) Mention de la délivrance du brevet:
**18.04.90 Bulletin 90/16**

(84) Etats contractants désignés:
**DE FR GB IT SE**

(56) Documents cités:
**EP-A- 0 118 595**
**FR-A- 2 353 040**
**FR-A- 2 392 240**
**LU-A- 31 272**
**US-A- 2 720 749**
**US-A- 2 776 623**
**US-A- 3 221 495**
**US-A- 3 304 865**
**US-A- 3 583 162**
**US-A- 3 910 191**

(73) Titulaire: **SOCIETE NATIONALE DES POUDRES ET EXPLOSIFS, 12, quai Henri IV, F-75181 Paris Cédex 04(FR)**

(72) Inventeur: **Granier, Georges, 24 bis, rue du Château, F-91170 Viry Chatillon(FR)**
Inventeur: **Grimelli, Claude, 15, rue Raymond Jaclard, F-91140 Alfortville(FR)**
Inventeur: **Fauconnier, Alain, 17, Place Duquesne, F-91710 Vert le Petit(FR)**
Inventeur: **Jacquemin, Philippe, 3, rue Gay Lussac, F-91610 Ballancourt(FR)**

## Description

L'invention concerne un allumeur pyrotechnique pouvant être mis en place et pouvant être retiré du col de la tuyère d'un propulseur, ce propulseur contenant notamment un chargement en propergol solide. La fixation de cet allumeur s'effectue au moyen d'une partie qui est en appui sur le convergent de la tuyère et d'une autre partie qui est en appui sur le divergent de la tuyère.

Les allumeurs fixables dans les tuyères des propulseurs sont connus depuis de nombreuses années, et par exemple vers 1950 les brevets US 2,720,749 et US 2,776,623 mentionnaient de tels allumeurs.

Selon le brevet US 2,720,749 l'allumeur était vissé dans le divergent de la tuyère au moyen d'une bague filetée reliée initialement à ce divergent par des doigts destructibles. Si un tel allumeur peut être mis en place et peut être retiré du col de la tuyère à tout moment, il faut toutefois noter qu'un vissage excessif de l'allumeur sur la bague risque d'endommager les doigts par cisaillement, ce qui entrainerait une éjection trop précoce de l'allumeur lors de la mise à feu du chargement propulsif. De plus, dans tous les cas, cette éjection de l'allumeur au moment de la mise à feu ne s'effectue qu'après l'arrachement des doigts de positionnement, un tel arrachement ne permettant pas l'éjection de l'allumeur dans des conditions de pression déterminées et reproductibles. Cet arrachement qui est dû à la conicité du divergent entraîne de plus une perturbation du jet gazeux puisqu'après l'arrachement le reste de chaque doigt forme une saillie dans le divergent.

Le brevet US 2 776 623 se rapporte à un tout autre type d'allumeur dont le corps est en matière plastique et qui présente un diamètre très supérieur au diamètre du col de la tuyère. Un tel corps d'allumeur doit être détruit et expulsé par la tuyère après la mise à feu du propulseur, ce qi perturbe de façon aléatoire le début de la propulsion et, pour remédier à cet inconvénient, des perfectionnements ont été proposés notamment dans les brevets FR 2 392 240 et EP 0 118 595. Selon ces deux brevets plus récents, après la mise à feu du chargement propulsif, l'expulsion de l'allumeur s'effectue dans des conditions de pression moins variables et plus reproductibles que les conditions obtenues par la mise en œuvre des techniques antérieures, du fâit de la découpe d'ailettes en appui sur le convergent de la tuyère, mais de tels allumeurs ne peuvent plus être mis en place et retiré du col de la tuyère à tout moment, notamment pour des conditions de sécurité et d'interchangeabilité.

On a alors proposé un autre genre d'allumeur qui soit montable et démontable à tout moment et qui, au moment de la mise à feu, puisse être expulsé de manière reproductible. Un tel allumeur est par exemple décrit dans le brevet US 3 304 865. L'allumeur décrit dans ce brevet comprend une virole engagée dans le convergent – divergent de la tuyère, un corps central porteur du dispositif d'allumage proprement dit et un diaphragme flexible destiné à assurer le positionnement par coincement de la virole dans le convergent de la tuyère. Un tel allumeur répond bien aux objectifs énoncés ci-dessus mais présente l'inconvénient de nécessiter, pour le montage et le démontage, la séparation de la tuyère du bloc propulsif, la virole de l'allumeur objet du brevet US 3 304 865 ne pouvant être introduite ou retirée que par l'avant de la tuyère.

La présente invention a pour but de permettre la mise en place et le retrait d'un allumeur dans la tuyère d'un propulseur, tout en permettant l'expulsion de cet allumeur après la mise à feu du chargement propulsif dans des conditions de pression bien déterminées et reproductibles, et sans perturber l'écoulement des gaz de combustion.

Ces résultats sont obtenus par un comportant des parties, qui après mise en place de l'allumeur dans ladite tuyère, sont en appui sur le convergent et sur le divergent de la tuyère, les parties qui sont en appui sur le convergent de la tuyère sont des moyens externes de fixation expansibles radialement, maintenus en position déployée radialement par des moyens de maintien comprenant un disque, caractérisé en ce que les parties en appui sur le divergent sont telles qu'elles ne peuvent pas être introduites depuis le convergent vers le divergent par le col de la tuyère et en ce que les moyens externes de fixation sont tels qu'avant la mise en place des moyens de maintien, ils peuvent être introduits dans la tuyère par son côté divergent et en ce que ce disque est un disque de cisaillement.

Plus particuliérement les moyens externes de fixation de l'allumeur sont ménagés dans une virole périphérique qui est indépendante du corps central de l'allumeur, ce qui permet de déployer radialement les moyens externes de fixation par l'introduction du corps central de l'allumeur dans cette virole périphérique, et ce qui évite ainsi l'utilisation de tiges de commandes ou de tout autre dispositif intermédiaire entre les moyens externes de fixation et l'élément interne de rupture.

Avantageusement la virole périphérique comporte des moyens externes de fixation qui sont constitués par au moins deux pattes latérales de flexion en appui sur le corps central de l'allumeur, ces pattes de flexion pouvant être remplacées par des pattes latérales indépendantes qui sont articulées sur un axe ou qui sont en forme de coin et coulissent radialement. Ces pattes latérales présentent vers leurs extrémités libres une épaisseur efficace supérieure à la demi-différence entre le diamètre du col de la tuyère et le diamètre du corps central de l'allumeur.

Selon un mode de réalisation particulier, l'élément interne de rupture est un disque de cisaillement qui forme un opercule, ce disque pouvant être ajouré pour ne ménager que des pattes radiales de cisaillement. Ce disque de cisaillement est initialement solidarisé au corps central de l'allumeur et à la virole périphérique et préférentiellement ce disque et le corps central sont formés dans la même pièce par usinage ou par moulage.

Avantageusement le corps central de l'allumeur est constitué, par un étui qui contient la charge d'allumage, et par un support central en liaison avec l'élément interne de rupture, ce support pouvant comporter un bord périphérique qui constitue le disque de cisaillement solidarisé à la virole périphérique au moyen d'une bague filetée. Préférentiellement cette bague filetée comporte à l'extrémité opposée au disque de cisaillement au moins une butée intérieure dont le diamètre interne est inférieur au diamètre de cisaillement du disque.

Les avantages obtenus grâce à cette invention consistent essentiellement en ce que les conditions de mise à feu du chargement propulsif sont améliorées par le fait que l'expulsion de l'allumeur se produit dans des conditions de pression déterminées et reproductibles, ce qui permet notamment de limiter, ou même de supprimer, les surpressions de la chambre de combustion au moment de l'inflammation du chargement propulsif. En effet au cours de la mise à feu le gradient de montée en pression d'une chambre de combustion à propergol solide est de l'ordre de 3 à 10 bars par milliseconde, et dans ces conditions tout retard aléatoire d'ouverture de la tuyère peut entraîner une surpression initiale qui doit être prise en compte pour le calcul de la résistance du corps du propulseur. L'utilisation d'un élément interne de rupture intégré dans l'allumeur, notamment d'un disque de cisaillement qui forme un opercule, permet de déterminer avec une grande précision la pression interne entraînant la rupture de cet élément, alors que l'arrachement de doigts ou de pattes ne peut s'effectuer qu'avec des marges d'erreur très supérieures. De plus, les moyens externes expansibles qui assurent la fixation de l'allumeur sur le convergent de la tuyère sont libérés dans des conditions parfaitement reproductibles dont l'instant initial de cette libération correspond à l'instant où se rompt le moyen de rupture, qui est intégré dans l'allumeur, et qui selon l'invention maintient initialement en position déployée les moyens externes de fixation.

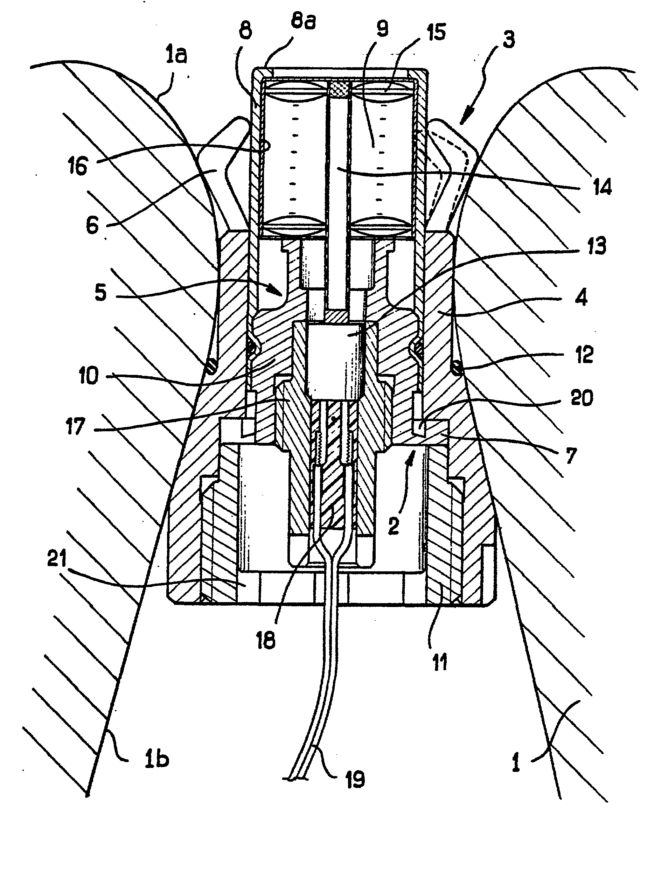

Dans ce qui suit, l'invention est exposée plus en détail à l'aide d'un dessin dont la figure unique représente un mode particulier d'éxécution.

La figure représente en coupe longitudinale axiale la partie centrale de la tuyère d'un propulseur qui est équipée d'un allumeur conforme à l'invention.

Selon cette figure l'allumeur qui obture initialement de façon étanche la tuyère (1) d'éjection des gaz du propulseur est en appui sur le convergent (1a) et sur le divergent (1b) de cette tuyère. La virole périphérique (4) de cet allumeur comporte une partie conique, qui présente la même conicité que le divergent de la tuyère, qui est en contact avec ce divergent, et qui est prolongée par une partie cylindrique laquelle présente un diamètre légèrement inférieur au diamètre du col de la tuyère et est engagée dans ce col. La transition entre ces parties conique et cylindrique de la virole périphérique forme une base d'appui d'un joint torique d'étanchéité (12) et, à l'opposé de la partie conique, cette virole est prolongée par quatre pattes latérales de flexion (6) qui constituent les moyens externes de fixation (3) expansibles radialement en appui sur le convergent (1a) de la tuyère. L'ensemble de la virole périphérique (4) est réalisé en un matériau permettant la flexion des pattes latérales (6), notamment une matière plastique telle que du polycarbonate, et ces pattes sont moulées en position moyenne qui est représentée en pointillés dans la moitié droite de la figure, le diamètre maximal externe de ces pattes en position de moulage étant supérieur au diamètre du col de la tuyère, et le diamètre minimal interne de ces pattes en position de moulage étant inférieur au diamètre intérieur de la virole périphérique (4).

Lors du montage de l'allumeur dans la tuyère (1) d'éjection des gaz du propulseur, la virole périphérique (4) est d'abord introduite seule dans le col de la tuyère par simple poussée à partir du divergent, cette poussée déterminant la flexion interne des quatre pattes latérales (6) qui reprennent par élasticité leur position de moulage et assurent le maintien provisoire de cette virole jusqu'à ce que le corps central (5) de l'allumeur soit glissé dans cette virole. Ce corps central est constitué par l'étui (8) cylindrique qui contient la charge d'allumage (9) et par le support central (10) de l'allumeur sur lequel est serti cet étui. La mise en place du corps central (5) dans la virole périphérique (4) détermine la flexion externe des quatre pattes latérales (6) qui sont poussées au contact du convergent (1a) de la tuyère et assurent la fixation de l'allumeur dans cette tuyère après déformation du joint torique d'étanchéité (12).

Le support central (10) contient l'inflammateur (13) qui est renforcé par une poudre d'allumage et qui assure le maintien d'un tube de flamme (14) autour duquel sont rangées les pastilles (15) aluminothermiques d'allumage contenues dans le boîtier (16). Cet inflammateur est solidarisé au porte-inflammateur (17) au moyen d'une colle thermofusible (18) d'étanchéité dans laquelle sont noyés les conducteurs électriques (19) de mise à feu. Ce support central (10) comporte un bord périphérique (7) qui constitue un disque partiel de cisaillement, douze fentes radiales déterminant douze pattes en forme de secteurs de couronne dont la zone de rupture est déterminée par la surface cylindrique externe de la rainure (20) dont le diamètre est légèrement supérieur au diamètre extérieur de l'étui (8). Le corps central (5) de l'allumeur est solidarisé à la virole périphérique (4) au moyen de la bague filetée (11) qui bloque les extrémités des pattes du disque de cisaillement sur un appui ménagé à partir de l'alésage de cette virole. Le diamètre intérieur de cette bague filetée extérieurement est supérieur au diamètre de la zone de rupture des pattes du disque de cisaillement, à l'exception de la partie arrière de cette bague (11) qui comporte quatre bossages internes (21) permettant le vissage de cette bague et constituant une butée arrière du corps central (5) après cisaillement des pattes du bord périphérique (7).

Le retrait de l'allumeur du col de la tuyère s'effectue en inversant l'ordre des opérations de montage. Après avoir dévissé la bague filetée (11) il est possible de retirer le corps central (5) de l'allumeur, les pattes latérales de flexion (6) reprenant par élasticité leurs positions de moulage représentées par des traits pointillés sur la figure. Si cela est nécessaire, il est alors possible d'extraire la virole périphérique (4) par une traction arrière qui provoque la flexion interne des pattes latérales jusqu'à ce que celles-ci parviennent au col de la tuyère. Le retrait total de l'allumeur du col de la tuyère s'effectue donc en deux parties, alors que l'éjection de cet allumeur après la mise à feu du chargement propulsif s'effectue en une seule partie. En effet, lorsque la pression interne qui règne dans la chambre de combustion du propulseur induit un effort de poussée sur le corps central (5) de l'allumeur qui est égal à l'effort de cisaillement du disque (7), celui-ci se rompt et le corps central est projeté vers l'arrière. Dès que la face avant (8a) de l'étui parvient au niveau du contact avec les pattes latérales de flexion celles-ci sont projetées au centre et la pression de la chambre de combustion éjecte alors également la virole périphérique (4) et la bague filetée (11) dont les bossages internes (21) sont percutés par le corps central (5), l'allumeur étant alors éjecté en une seule partie et dégageant directement la totalité de la section de passage du col de la tuyère (1).

## Revendications

1. Allumeur d'un chargement propulsif pour fixation dans la tuyère (1) d'éjection des gaz d'un propulseur, comportant des parties, qui après mise en place de l'allumeur dans ladite tuyère, sont en appui sur le convergent (1a) et sur le divergent (1b) de la tuyère, les parties qui sont en appui sur le convergent (la) de la tuyère sont des moyens externes de fixation, (3) expansibles radialement, maintenus en position déployée radialement par des moyens de maintien comprenant un disque, caractérisé en ce que les parties en appui sur le divergent (1b) sont telles qu'elles ne peuvent pas être introduites depuis le convergent vers le divergent par le col de la tuyère et en ce que les moyens externes de fixation (3) sont tels qu'avant la mise en place des moyens de maintien, ils peuvent être introduits dans la tuyère par son côté divergent (1b) et en ce que ce disque est un disque de cisaillement.

2. Allumeur selon la revendication 1, caractérisé en ce que les moyens externes de fixation (3) de l'allumeur sont ménagés dans une virole périphérique (4) qui est indépendante du corps central (5) de l'allumeur.

3. Allumeur selon la revendication 2, caractérisé en ce que la virole périphérique (4) comporte des moyens externes de fixation qui sont constitués par au moins deux pattes latérales de flexion (6) en appui sur le corps central (5) de l'allumeur.

4. Allumeur selon la revendication 3, caractérisé en ce que les pattes latérales de flexion (6) présentent vers leurs extrémités libres une épaisseur efficace supérieure à la demi-différence entre le diamètre du col de la tuyère (1) et le diamètre du corps central (5) de l'allumeur.

5. Allumeur selon la revendication 2, caractérisé en ce que le disque de cisaillement (7) forme un opercule.

6. Allumeur selon la revendication 5, caractérisé en ce que le disque de cisaillement (7) est initialement solidarisé au corps central (5) de l'allumeur et à la virole périphérique (4).

7. Allumeur selon la revendication 2, caractérisé en ce que le corps central (5) de l'allumeur est constitué par un etui (8) qui contient la charge d'allumage (9) et par un support central (10) en liaison avec le disque de cisaillement (7).

8. Allumeur selon la revendication 7, caractérisé en ce que le support central (10) comporte un bord périphérique qui constitue le disque de cisaillement (7).

9. Allumeur selon la revendication 8, caractérisé en ce que le disque de cisaillement (7) est solidarisé à la virole périphérique (4) au moyen d'une bague filetée (11).

10. Allumeur selon la revendication 9, caractérisé en ce que la baque filetée (11) comporte à l'extrémité opposée au disque de cisaillement au moins une butée intérieure dont le diamètre interne est inférieur au diamètre de cisaillement du disque (7).

## Patentansprüche

1. Zündeinrichtung für einen Treibstoff zur Befestigung in der Gasausstoßdüse (1) einer Rakete, mit Teilen, die sich nach dem Einbringen der Zündeinrichtung in die Düse gegen die Konvergente (1a) und gegen die Divergente (1b) der Düse abstützen, wobei die gegen die Konvergente (1a) der Düse sich abstützenden Teile äußere, in radialer Richtung ausdehnbare Befestigungseinrichtungen (3) sind, die in ihrer in radialer Richtung ausgestreckten Position von Halteeinrichtungen, die eine Scheibe aufweisen, gehalten werden, dadurch gekennzeichnet, daß die gegen die Divergente (1b) sich abstützenden Teile so ausgebildet sind, daß sie nicht von der Konvergente her durch den Düsenhals in die Divergente eingeschoben werden können, daß die äußeren Befestigungseinrichtungen (3) so ausgebildet sind, daß sie vor dem Einsetzen der Halteeinrichtungen über die divergente Seite (1b) der Düse in die Düse eingeschoben werden können und daß die Scheibe eine Schubscheibe ist.

2. Zündeinrichtung gemäß Anspruch 1, dadurch gekennzeichnet, daß die äußeren Befestigungseinrichtungen (3) der Zündeinrichtung an einem peripheren Ring (4) angeordnet sind, der vom Mittelkörper (5) der Zündeinrichtung unabhängig ist.

3. Zündeinrichtung gemäß Anspruch 2, dadurch gekennzeichnet, daß der periphere Ring (4) äußere Befestigungseinrichtungen aufweist, die von wenigstens zwei seitlichen, biegsamen Klammern (6), die sich gegen den Mittelkörper (5) der Zündeinrichtung abstützen, gebildet werden.

4. Zündeinrichtung gemäß Anspruch 3, dadurch gekennzeichnet, daß die seitlichen, biegsamen Klammern (6) in Richtung ihrer freien Enden eine wirksame Stärke besitzen, die größer ist als die Hälfte der aus dem Durchmesser des Halses der Düse (1) und dem Durchmesser des Mittelkörpers (5) der Zündeinrichtung sich ergebenden Differenz.

5. Zündeinrichtung gemäß Anspruch 2, dadurch gekennzeichnet, daß die Schubscheibe (7) ein Innenhütchen bildet.

6. Zündeinrichtung gemäß Anspruch 5, dadurch gekennzeichnet, daß die Schubscheibe (7) zuerst mit dem Mittelkörper (5) der Zündeinrichtung und dem peripheren Ring (4) zusammengefügt wird.

7. Zündeinrichtung gemäß Anspruch 2, dadurch gekennzeichnet, daß der Mittelkörper (5) der Zündeinrichtung von einer Kapsel (8) gebildet wird, die den Zündstoff (9) enthält und über einen Mittelträger (10) mit der Schubscheibe (7) verbunden ist.

8. Zündeinrichtung gemäß Anspruch 7, dadurch gekennzeichnet, daß der Mittelträger (10) einen peripheren Rand aufweist, der die Schubscheibe (7) bildet.

9. Zündeinrichtung gemäß Anspruch 8, dadurch gekennzeichnet, daß die Schubscheibe (7) mittels eines Gewinderings (11) mit dem peripheren Ring (4) zusammengefügt wird.

10. Zündeinrichtung gemäß Anspruch 9, dadurch gekennzeichnet, daß der Gewindering (11) an seinem der Schubscheibe gegenüberliegenden Ende wenigstens einen inneren Anschlag aufweist, dessen Innendurchmesser kleiner ist als der Durchmesser der Schubscheibe (7).

## Claims

1. Igniter of a propellant charge for fixing in the nozzle (1) for the ejection of the gases from a rocket, comprising parts which, after placing in position of the igniter in the said nozzle, are in abutment on the convergent section (1a) and on the divergent section (1b) of the nozzle, the parts which are in abutment on the convergent section (1a) of the nozzle are external fixing means (3) which are radially expansible, and are retained in the radially spread-out position by retaining means comprising a disc, characterized in that the parts in abutment on the divergent section (1b) are such that they cannot be introduced from the convergent section to the divergent section through the neck of the nozzle, and in that the external fixing means (3) are such that before the placing in position of the retaining means they can be introduced into the nozzle through its divergentsection side (1b), and in that this disc is a shear disc.

2. Igniter according to claim 1, characterized in that the external fixing means (3) of the igniter are formed in a peripheral ferrule (4) which is independent of the central body (5) of the igniter.

3. Igniter according to claim 2, characterized in that the peripheral ferrule (4) comprises external fixing means which are constituted by at least two lateral flexion tabs (6) in abutment on the central body (5) of the igniter.

4. Igniter according to claim 3, characterized in that the lateral flexion tabs (6) exhibit towards their free ends an effective thickness greater than the halfdifference between the diameter of the neck of the nozzle (1) and the diameter of the central body (5) of the igniter.

5. Igniter according to claim 2, characterized in that the shear disc (7) forms an interior cap.

6. Igniter according to claim 5, characterized in that the shear disc (7) is initially made solid with the central body (5) of the igniter and with the peripheral ferrule (4).

7. Igniter according to claim 2, characterized in that the central body (5) of the igniter is constituted by a casing (8) which contains the ignition charge (9) and by a central support (10) connected to the shear disc (7).

8. Igniter according to claim 7, characterized in that the central support (10) comprises a peripheral edge which constitutes the shear disc (7).

9. Igniter according to claim 8, characterized in that the shear disc (7) is made solid with the peripheral ferrule (4) by means of a threaded ring (11).

10. Igniter according to claim 9, characterized in that the threaded ring (11) comprises, at the end opposite the shear disc, at least one internal abutment surface, the internal diameter of which is less than the shear diameter of the disc (7).